# EUROPEAN PATENT APPLICATION

(11) **EP 4 718 058 A1**
(43) Date of publication of application: **01.04.2026**
(21) Application number: 24213413.8
(22) Date of filing: 15.11.2024
(51) Int. Cl.: G01N 21/05, B01L 3/00, G01N 21/53, G01N 21/03, G01N 21/64

(54) **OPTOFLUIDIC DEVICE BASED ON A LASER-MACHINED CAPILLARY**

(30) Priority: 30.09.2024 PT 2024119727
(71) Applicant: Universidade Do Porto, 4099-002 Porto (PT); INESC TEC - Instituto de Engenharia de Sistemas e Computadores, Tecnologia e Ciência, 4200-465 Porto (PT)
(72) Inventor: DA SILVA MARQUES, PAULO VICENTE, 4200-465 PORTO (PT); MENDES DA SILVA MAIA, JOÃO MIGUEL, 4200-465 PORTO (PT); GABRIEL CAMEIRA, ANA CAROLINA, 4200-465 PORTO (PT)
(74) Representative: Patentree

(57) **Abstract**

The present document discloses an optofluidic device for receiving a liquid and measuring a light signal comprising: at least one optical fiber; and a capillary tube for receiving a portion of the at least one optical fiber, and wherein the at least one optical fiber is inserted via a borehole in a wall of the capillary tube. A method of fabrication of the optofluidic device is also disclosed comprising the steps of: generating femtosecond laser pulses; focusing said laser pulses onto a predetermined capillary tube wall depth; controlling the position and intensity of said femtosecond laser pulses to induce a localized pattern on capillary tube wall; placing the capillary tube under wet-etching to create a borehole across the capillary tube wall and in the modified location; arranging the at least one lensed optical fiber in the borehole. Alternatively, a refractive microlens is laser-machined inside the capillary wall of the optofluidic device to focus light from the optical fiber inside the capillary. It is also disclosed a method of measuring light signals from a liquid using the optofluidic device.

## Description

### TECHNICAL FIELD

The present disclosure relates to an optofluidic device for measuring optical properties of a liquid (e.g. absorption) or manifestations of light-matter interactions, such as light scattering due to particulates/cells dispersed in an aqueous solution.

### BACKGROUND

The measurement of optical signals (e.g. absorption, scattering or fluorescence signals) of solutions or particulates within solutions (e.g. live cells within an aqueous solution) requires an experimental apparatus including discrete free-space optical components for excitation and signal detection, while the samples under test are usually within an optical cuvette. The necessity for having systems capable of handling low volumes of fluid requires precise microfluidics, which must be incorporated with microscale optical components performing the functions referred above. One possibility is the use of lensed optical fibers immersed in the solution under analysis in a microfluidic chamber, performing both the excitation and collection of the readout signal (for instance, for light scattering). Consequently, the integration of optical fibers, as well as other photonic components, within the microfluidic channel becomes very important, allowing accurate detection and analysis of scattering, fluorescent or transmitted signals.

Usually, microfluidics is made by lithographic processes and micromoulding processes in PDMS materials. The fabrication of optofluidic devices by integrating the produced microfluidic systems with guided wave components or by assembling it with optical fibers, used to both deliver light to the channel and to collect the signal from it, is also cumbersome and not particularly easy.

Femtosecond laser processing can be used to fabricate microfluidic channels on fused silica planar substrates and also to produce waveguides, integrated optical circuits (power splitters, gratings, interferometers), lenses and grooves for fiber insertion and light delivery, making it a very robust and versatile microfabrication technique. However, fabrication times can be long and not always the waveguides produced by femtosecond laser direct writing are suitable, e.g., due to spectral losses, monomode behavior, etc.

In the state of the art, on-chip fiber solutions are known for incorporating multiple sensors in line with the flow channels for comprehensive cell analysis. However, despite its advanced capabilities, this approach presents several disadvantages. These include potential complexities in integrating and aligning multiple sensors within the flow channels, challenges in maintaining consistent sensitivity and accuracy across all sensors, and difficulties in managing the increased data processing demands. Additionally, the physical space required for multiple sensors can complicate the design and operation of the microfluidic system, potentially impacting its overall efficiency and reliability.

The paper [1] discloses a dual-beam fiber laser trap combined with a capillary-based microfluidic system to trap epithelial cells, to study their deformability through optical-induced stretching and classify them. The fabrication requires a method for aligning the two opposing optical fibers with a glass capillary by means of an external platform to position the optical fibers in place. However, this requires expensive and time-consuming lithographic techniques for fabrication of alignment structures. It does not describe the incorporation of optical lenses and does not allow direct contact between the optical fibers and the liquid flow.

The paper [2] discloses an optofluidic detection setup, based on droplet microfluidics, for simultaneous absorbance, fluorescence and scattered light multiparametric analysis of biological samples, by integrating micro-lenses and embedding optical fibers for guiding light in and out of the microfluidic chip. However, this example requires soft lithography steps to the production of the microfluidic channel, lenses and fiber alignment structures.

The paper [3] discloses a hydrodynamic flow-based microfluidic platform coupled with on-chip integrated fiber optics for multiparametric analysis, through fluorescent and scattered light detection, of cells and human blood samples from a single point of interrogation. However, the proposed device geometry is limited since the adopted molding microfabrication technique is constrained to two-dimensional patterning. In particular, the height of the microfluidic channel must be only slightly higher than the height/diameter of the optical fiber. Further, it does not allow direct contact between any of the optical fibers used and the liquid sample; the presented planar geometry limits the number of optical elements (lasers, detectors, additional optical fibers) that can be integrated in the device to extract more data from the single point of interrogation.

All examples on papers [1], [2], [3] require planar lithography/soft lithography techniques for the fabrication of the microfluidic channel and/or optical fiber alignment features.

In summary, currently there is not an established solution for production of optofluidic devices or devices produced on even a moderate volume/quantity; monolithic incorporation of optical guided wave devices on microfluidic devices is difficult; non-monolithic approaches are also cumbersome; optical fibers or other optical waveguides are difficult to incorporate on microfluidic devices fabricated by standard production techniques; fabrication is time consuming.

These facts are disclosed in order to illustrate the technical problem addressed by the present disclosure.

### GENERAL DESCRIPTION

It is disclosed an optofluidic device for receiving a liquid, in particular a liquid flow, and measuring a light signal characterizing said liquid, comprising: at least one optical fiber for acquiring the light signal; and a capillary tube for receiving the liquid and arranged for receiving a portion of the at least one optical fiber; wherein the at least one optical fiber is inserted via a borehole of a wall of the capillary tube.

In an embodiment, the borehole is a through borehole, i.e. extends the full thickness of the wall of the capillary tube, and the at least one optical fiber is in direct contact with the liquid flow.

In an embodiment, the optical fiber is a lensed optical fiber, in particular a tapered optical fiber.

In an embodiment, the bore is a shallow borehole, i.e. extends only partly the full thickness of the wall of the capillary tube.

In an embodiment, the wall of the capillary tube comprises an internal lens formed via etching, in particular the internal lens is configured to focus a light signal from the at least one optical fiber, more specifically in particular the internal lens is formed between the shallow borehole and the liquid flow.

In an embodiment, the borehole in a wall of the capillary tube, and consequently the at least one optical fiber, is at an oblique angle relatively to the liquid flow, preferably is between 0 and 45 degrees.

In an embodiment, the optofluidic device comprises a pair of optical fibers placed at an obtuse or right angle relatively to each other.

In an embodiment, the capillary tube comprises a cross section of circular, rectangular, square, triangular, oval, or elliptical shape.

In an embodiment, the capillary wall thickness is up to 2 mm.

In an embodiment, the capillary tube and the at least one optical fiber are fixed via an optical adhesive.

In an embodiment, the capillary tube is made of fused silica, quartz or borosilicate glass.

In an embodiment, a lab-on-a-chip device comprises the optofluidic device, in particular for a biomedical application.

It is also disclosed a method of fabrication of the optofluidic device, comprising the steps: generating femtosecond laser pulses; focusing said femtosecond laser pulses onto a predetermined capillary tube wall depth; controlling the position and intensity of said femtosecond laser pulses to induce a localized pattern, i.e., a localized modification, within the thickness of the capillary tube wall; placing the capillary tube wall under wet-etching in hydrofluoric acid or potassium hydroxide to create a borehole in the modified location within the capillary tube wall; arranging the at least one optical fiber in the borehole.

It is also disclosed an alternative method of fabrication of the optofluidic device. Instead of relying on laser-induced etching selectivity, the borehole can be fabricated through femtosecond laser ablation.

In an embodiment, the method of fabrication further comprises a second pattern, or localized modification, within the capillary tube wall configured as a lens for focusing the light from the optical fiber in the liquid flow within the capillary tube.

It is further disclosed a method of measuring a light signal characterizing a liquid, in particular a liquid flow or a stationary liquid, comprising the steps: receiving the liquid in the optofluidic device; propagating light into the liquid received in the capillary tube through the at least one optical fiber, e.g., an excitation fiber; acquiring a forward, back and/or side angled scattered, fluorescent, or transmitted light signal from the liquid through at least one optical fiber, which can be either the same as the excitation fiber or a different one; and measuring the acquired light signal to infer one or more characteristics of the liquid, e.g., cells flowing along a liquid solution.

In an embodiment, the liquid flow comprises live cells and/or the liquid flow is a biofluid, preferably blood, urine, or saliva.

In an embodiment, the optofluidic device is machined from a silica capillary and incorporating optical elements, e.g., optical fibers, optical waveguides or integrated lenses.

Advantageously, herein the optofluidic device, optical fibers are easily integrated, multi-configurations are possible, fluidic tubings are easily connected, and scalability to multiple point sensing is easily achievable.

In an embodiment, the borehole is circular with a diameter slightly larger, e.g., a diameter up to 10-15% larger, than the diameter of the optical fiber. For instance, if a standard SMF28 optical fiber (125 µm cladding diameter) is used, then the diameter of the borehole is in-between 130 and 135 µm. Smaller diameters make the insertion of the optical fiber through the borehole made at the capillary wall more difficult, while larger diameters create too much leeway thereby preventing the optical fiber from being positioned inside the borehole at a specified angle.

In an embodiment, the capillary is etched in hydrofluoric acid (diluted in deionized water to a concentration of 2.5 to 40%) to reveal the borehole or any other laser-inscribed pattern. Given that hydrofluoric acid also etches pristine glass, the obtained geometry may be slightly different than the one designed; for instance, a cylindrical borehole becomes tapered at both extremities with a tapering angle between 1 and 5°. The geometry of the laser-inscribed pattern may be altered to precompensate for this effect, or potassium hydroxide (diluted in deionized water to a concentration of 5-10 mol and at a temperature of 80-95°) may be used as an alternative etchant to obtain a higher-fidelity replica of the designed geometry (this is due to the fact that KOH has a higher etching selectivity than HF, etching pristine silica at a much lower rate than HF).

It is also disclosed a method for inserting the optical fiber inside the capillary tube. A holder can be used to keep the capillary in place. A groove is machined on the surface of the holder, spanning its entire length and being intercepted by a vertical drilled opening. The capillary rests over the groove, with the borehole placed over the vertical opening. The optical fiber is then placed close to the outer wall of the capillary tube using precision stages with micrometric/nanometric resolution. The capillary is rotated to align the entrance of the borehole with the optical fiber, while the precision stages are used to correct any additional transversal or angular misalignment between both. With both being aligned, the fiber is then inserted inside the capillary. This entire process is imaged in situ using visual means, e.g. a microscopic camera. The optical fiber tip can be placed anywhere inside the capillary with a precision higher than 10 µm using live optical imaging.

In an embodiment, the optical adhesive shows excellent glass-to-glass adhesion, biocompatibility and suitable viscosity (around 300 cps).

In an embodiment, the extremities of the capillary tube are easily connected to microfluidic tubing, either by using adequate and readily available microfluidic adapters/unions or by fitting the capillary directly inside the tubing.

After adhering the optical fiber to the capillary and connecting the capillary to the microfluidic tubing, the whole assembly is mounted on a different holder. The capillary and the optical fiber are all securely attached to this holder via glue.

In an embodiment, the holder is made of a thermally conductive material for thermal stability and/or made of a single block material for mechanical stability.

### BRIEF DESCRIPTION OF THE DRAWINGS

The following figures provide preferred embodiments for illustrating the disclosure and should not be seen as limiting the scope of invention.
**Figure 1****:** Schematic representation, in a cross section view, of an embodiment of an optofluidic device with a circular-shaped capillary tube.
**Figures 2A, 2B****,** **2C****:** Schematic representations, in a cross section view, of three embodiments of an optofluidic device with a squared-shaped capillary tube.
**Figures 3A, 3B****:** Schematic representation, in a cross section view, of two embodiments, having one or three optical fibers aligned with a respective microlens, of an optofluidic device.
**Figure 4A****:** Schematic representation, in a top view, of the holder used for inserting the optical fiber inside the capillary tube and for bonding them together with an optical adhesive.
**Figure 4B****:** Schematic representation, in a perspective view, of an embodiment of an optofluidic device after assembly.

### DETAILED DESCRIPTION

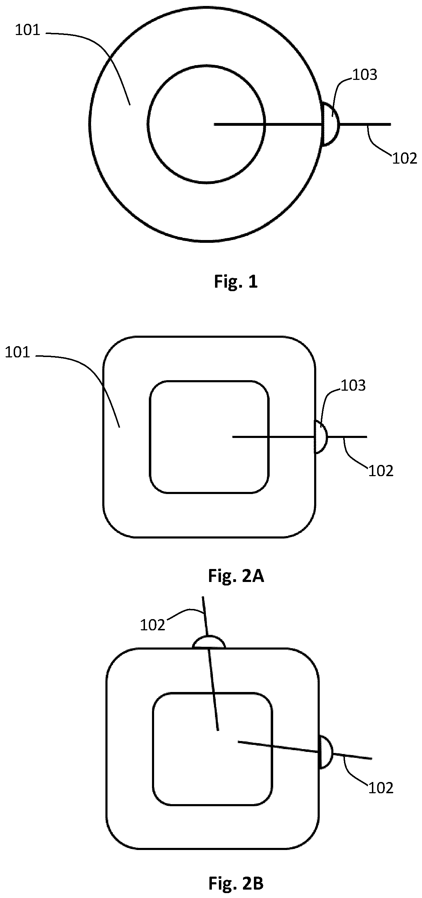

**Figure 1** shows a schematic representation of an embodiment of an optofluidic device with a circular-shaped capillary tube, wherein 101 represents a capillary tube, 102 represents a lensed optical fiber, 103 represents an optical adhesive.

**Figure 2A** shows a schematic representation of an embodiment of an optofluidic device with a squared-shaped capillary tube and one lensed optical fiber.

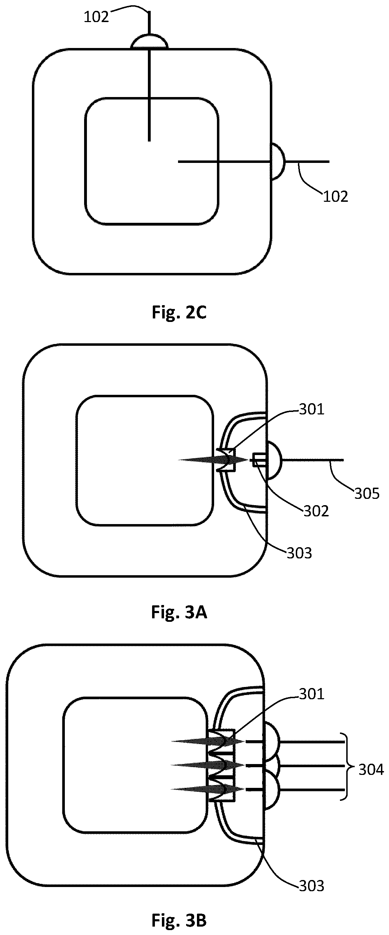

**Figures 2B** **and** **2C** show schematic representations of two embodiments of an optofluidic device with a squared-shaped capillary tube wherein two lensed optical fibers arranged at an obtuse angle and at a right angle between each other.

In square-shaped capillaries, light reflected from the far side wall of the capillary keeps diverging and is poorly coupled back into the optical fiber, which leads to a better signal-to-noise ratio (S/N ratio) of the light signal. In circular-shaped capillaries, the curvature of the inner wall of the capillary can focus light reflected on the far side wall back into the optical fiber increasing the noise on the collected light signal. In particular, when using circular-shaped capillaries, the fiber tip should be placed far from the center of the capillary to minimize the previous effect.

Better S/N ratios can also be obtained using the arrangement of Fig. 2B wherein the optical fiber is at an obtuse angle.

In an embodiment, the optofluidic device is used in the measurement of light absorption, light scattering, spectroscopy, and/or turbidity of the fluid.

As an example, the fabrication method uses femtosecond laser microfabrication techniques to create holes, e.g., transversal holes, on glass capillaries allowing the insertion of optical fibers through the same holes, creating an optofluidic device.

Alternatively, femtosecond laser microfabrication techniques are used for writing optical waveguides on the capillary wall.

Other functionalities can also be explored in other parts of the device [4] and the connection to external pumps and tubings is also straightforward at the extremities of the capillary tube.

In an embodiment, to protect the capillary against deleterious etching effects besides the necessary interest regions, an HF-resistant photoresist coating [2,3] is used.

Multiple optical fibers can be attached to a single capillary in multiple positions and orientations. Fibers can be pre-mounted in other devices, such as V-grooves blocks, for example, to add robustness to the final device. Multiple fibers can also be glued individually and then the device can be mounted and glued, for example, in a holder again to improve device robustness. Fibers can be glued without the glue reaching and affecting the fiber tip/tapered lens.

**Figures 3A, 3B** show a schematic representation of two embodiments, having one or multiple optical fibers of an optofluidic device, wherein 301 represents an integrated lens in the wall of the capillary tube, 302 represents a shallow borehole for aligning the optical fiber, 303 represents an etching via, 304 represents multiple optical fibers or a multicore fiber, and 305 represents a straight optical fiber.

Alternatively, microlenses can be integrated and fabricated in the capillary walls, focusing the light emerging from the optical fiber in the fluid within the capillary tube. In this way, there is no contact between the optical fiber and the liquid filling the channel creating a more robust device, a reduced risk of contamination, and enhanced durability and longevity of the device.

In an embodiment, integrated lenses are fabricated via laser direct writing followed by wet-etching; holes for fiber integration and automatic alignment with the fabricated lens are also made by laser exposure and wet-etching. Even more complex devices can be achieved by fabricating multiple lenses aligned with multiple optical fibers, or by having multicore optical fibers and an array of multiple lenses to obtain multi-analysis points. Seeking ease of fabrication, the lenses are easier to fabricate in capillaries with flat walls, i.e., capillaries with square or rectangular cross sections, easy to find in the market.

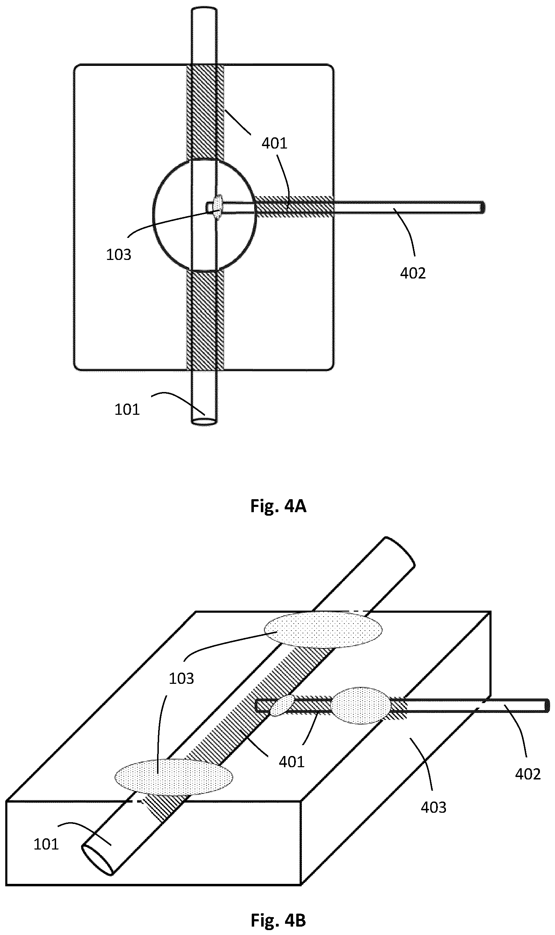

**Figure 4A** shows a schematic representation, in a top view, of the holder used for inserting the optical fiber inside the capillary tube, and bonding them together with an optical adhesive, wherein 101 represents a capillary tube, 103 represents an optical adhesive, 401 represents a v-groove, 402 represents an optical fiber, and 403 represents a holder.

**Figure 4B** shows a schematic representation, in a perspective view, of an embodiment of an optofluidic device after assembly.

The device on its multiple configurations can be used, for example, for spectroscopy, absorption, fluorescence, scattering, interferometric measurements of the fluids or particles of different kind, such as cells, within the fluid.

The present disclosure has the following characteristics and beneficial effects: the microfluidics part consists in a simple capillary tube that is supplied in a large range of dimensions and shapes and has a very low cost; femtosecond laser micromachining is used to fabricate openings (i.e., holes or cavities) for optical fiber insertion and gluing (standard fiber, lensed fiber, multicore fibers, etc.); production times are fast: this includes laser writing, etching and fiber assembly; multiple fibers, in multiple positions and orientations, can be used; other parts of the capillary can be used for other experiments, such as, for example, scattering or interferometry; connection of the extremities of the capillary to microfluidic tubing is straightforward in comparison to standard microfluidic planar devices.

Additionally, according to a particular embodiment of the invention, lenses can be fabricated in the capillary walls together with optical fiber alignment features, circumventing the need for lensed fibers and preventing the contact of the lens and the optical fiber with the fluids, ensuring robustness.

The optofluidic devices allow the measuring of light signals, in particular scattering or fluorescence signals, from live cells in an aqueous solution.

The present solution has several advantages, namely by using readily available capillary tubes it ensures the optical device is easily integrated with other pre-existing microfluidic devices through fittings, tubings, etc, or any type of optical fiber, multiple or single fibers, single-core or multi-core fibers, or optical components, such as lenses. Furthermore, the solution advantageously allows for the incorporation of the optical components on already known capillary tubes.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

### References

[1] Lincoln B, Schinkinger S, Travis K, Wottawah F, Ebert S, Sauer F, Guck J. Reconfigurable microfluidic integration of a dual-beam laser trap with biomedical applications. Biomed Microdevices. 2007 Oct;9(5):703-10. doi: 10.1007/s10544-007-9079-x. PMID: 17505883
[2] Biomicrofluidics 14, 024109 (2020); doi: 10.1063/1.5139603
[3] Biomicrofluidics 14, 054104 (2020); doi: 10.1063/5.0013250
[4] Mulkerns, Nial M. C., Wiliam H. Hofmann, Ian D. Lindsay, and Henkjan Gersen. 2022. "Shedding Light on Capilary-Based Backscatering Interferometry" Sensors 2, no. 6: 2157. https://doi.org/10.3390/s22062157
[5] Available at: https://www.allresist.com/resist-wiki-which-photoresists-are-suitable-for-hydrofluoric-acid-hf-etching/

## Claims

1. An optofluidic device for receiving a liquid, in particular a liquid flow, and measuring a light signal characterizing said liquid, comprising:
at least one optical fiber for acquiring the light signal; and
a capillary tube for receiving the liquid and arranged for receiving a portion of the at least one optical fiber;
wherein the at least one optical fiber is inserted via a borehole of a wall of the capillary tube.

2. The optofluidic device according to the previous claim wherein the borehole is a through borehole, and the at least one optical fiber is in direct contact with the liquid.

3. The optofluidic device according to any of the previous claims wherein the optical fiber is a lensed optical fiber, in particular a tapered optical fiber.

4. The optofluidic device according to claim 1 wherein the borehole is a shallow borehole which extends only partly the full thickness of the wall of the capillary tube.

5. The optofluidic device according to the previous claim wherein the wall of the capillary tube comprises an internal lens formed via etching, in particular the internal lens is configured to focus a light signal from the at least one optical fiber.

6. The optofluidic device according to any of the previous claims for receiving a liquid flow, wherein the borehole in a wall of the capillary tube is at an oblique angle relatively to the liquid flow, preferably between 0 and 45 degrees.

7. The optofluidic device according to any of the previous claims comprising an additional optical fiber inserted via an additional borehole of the wall of the capillary tube, wherein said pair of optical fibers is arranged at an obtuse or right angle relatively to each other.

8. The optofluidic device according to any of the previous claims wherein the capillary tube comprises a cross section of circular, rectangular, square, triangular, oval, or elliptical shape; and/or the capillary tube is made of fused silica, quartz or borosilicate glass.

9. The optofluidic device according to any of the previous claims wherein the capillary tube and the at least one optical fiber are fixed via an optical adhesive.

10. The optofluidic device for use in a lab-on-a-chip device, in particular for a biomedical analysis.

11. A method of fabrication of the optofluidic device of any of the claims 1-10, comprising the steps:
generating femtosecond laser pulses;
focusing said femtosecond laser pulses onto a predetermined depth of the capillary tube wall;
controlling the position and intensity of said femtosecond laser pulses to induce a localized pattern within a thickness of the capillary tube wall;
placing the capillary tube wall under wet-etching to create a borehole in the laser-induced pattern location within the capillary tube wall;
arranging the at least one lensed optical fiber in the borehole.

12. The method of fabrication according to the previous claims, further comprising controlling the position and intensity of said femtosecond laser pulses to induce a second pattern within the capillary tube wall configured as a lens for focusing the light from the optical fiber in the liquid within the capillary tube.

13. The method of fabrication according to any of the claims 11-12, wherein the wet-etching is performed using hydrofluoric acid or potassium hydroxide.

14. A method of measuring a light signal characterizing a liquid, in particular a liquid flow, comprising the steps:
receiving the liquid in the optofluidic device of any of the claims 1-10;
propagating light into the liquid received in the capillary tube through the at least one optical fiber;
acquiring a forward, back and/or side angled, light signal, being scattered, fluorescent, or transmitted light signal from the liquid through the at least one optical fiber; and
measuring the acquired light signal to infer one or more characteristics of the liquid.

15. The method according to the previous claim wherein the liquid comprises live cells and/or the liquid is a biofluid, preferably blood, urine, or saliva.
